# EUROPEAN PATENT APPLICATION

(11) **EP 4 822 819 A1**
(43) Date of publication of application: **14.10.2026**
(21) Application number: 24900032.4
(22) Date of filing: 09.12.2024
(51) Int. Cl.: H01M 10/613

(54) **BATTERY MODULE ASSEMBLY, BATTERY PACK AND VEHICLE**

(30) Priority: 07.12.2023 CN 202311677004; 05.07.2024 CN 202410904419
(71) Applicant: Beijing Chehejia Automobile Technology Co., Ltd., Beijing 101300 (CN)
(72) Inventor: ZHAO, Pengfei, Beijing 101300 (CN); JIANG, Leilei, Beijing 101300 (CN); ZHAO, Lizhi, Beijing 101300 (CN); LIN, Guoqing, Beijing 101300 (CN); XU, Chao, Beijing 101300 (CN); SHANG, Yibao, Beijing 101300 (CN); CHEN, Xiaoqiang, Beijing 101300 (CN); ZHOU, Changan, Beijing 101300 (CN); XIAO, Cong, Beijing 101300 (CN); WU, Di, Beijing 101300 (CN)
(74) Representative: advotec.
(86) International application number: PCT/CN2024/137918
(87) International publication number: WO 2025/119399

(57) **Abstract**

The embodiments of the present invention provide a battery module assembly, a battery pack and a vehicle. The battery module assembly comprises a battery module, busbars and a first liquid-cooling plate, wherein the battery module comprises a plurality of cells arranged in a first direction; there are a plurality of busbars, each busbar being connected to terminals of two adjacent cells to form a busbar row; and the first liquid-cooling plate extends in the first direction, and is attached to the busbar row in a second direction perpendicular to the first direction. Therefore, the battery module assembly according to the embodiments of the present invention has the advantages of improving the fast charging capability and improving the heat dissipation capability at the terminals.

## Description

### CROSS-REFERENCE TO RELATED APPLICATION

The present invention is based on and claims priorities to Chinese Patent Application No. 202311677004.9, filed on December 07, 2023, and Chinese Patent Application No. 202410904419.3, filed on July 05, 2024 the entire content of which is incorporated into the present invention by reference.

### FIELD

The present invention relates to the technical field of battery technologies, and in particular, to a battery module assembly, a battery pack equipped with the battery module assembly, and a vehicle.

### BACKGROUND

A power battery generates heat during charging, and the heat generation increases with current passing through battery cells, accompanied by a higher risk of thermal runaway, which is particularly prominent for a high-power fast-charging power battery. At present, to shorten the charging time of a power battery, the maximum fast-charging current of the battery has been set above 600A, especially near a post that plays a key role in charging and discharging. In the related art, a liquid-cooling plate arranged at a bottom or side of the power battery are still adopted for temperature control of the fast-charging battery. However, such a solution suffers from limited heat dissipation effect at the top of battery cell, resulting in poor fast-charging capability of the battery module.

### SUMMARY

The present invention aims to solve at least one of the technical problems existing in the related art to a certain extent. Accordingly, embodiments of the present invention provide a battery module assembly, which has the advantage of improving the heat dissipation capability at a post of the battery module assembly.

Embodiments of the present invention further provide a battery pack.

Embodiments of the present invention further provide a vehicle.

The battery module includes a plurality of battery cells arranged along a first direction; a plurality of bus bars are provided, and each of the plurality of bus bars is connected to posts of two adjacent battery cells of the plurality of battery cells to form a bus-bar row. A first liquid-cooling plate extends along the first direction and is attached to the bus-bar row along a second direction perpendicular to the first direction.

In the battery module assembly according to embodiments of the present invention, the first liquid-cooling plate is arranged on the plurality of bus bars connected to the posts, so that heat generated at the posts can be dissipated timely and rapidly through the first liquid-cooling plate. This improves the overall cooling capability of the liquid cooling assembly for the battery module, prevents heat accumulation near the posts that may cause thermal runaway of battery cells due to excessive local temperature, and is applicable to fast-charging batteries, thereby facilitating improvement of the fast-charging capability and service safety of the battery module.

Therefore, the battery module assembly of embodiments of the present invention has the advantages of enhancing heat dissipation capability at posts, improving fast-charging capability of the battery module and operational safety.

In some embodiments, the first liquid-cooling plate includes a liquid-cooling portion and an overlapping edge connected to each other. The liquid-cooling portion is attached to the bus-bar row, and the overlapping edge abuts shoulders of the plurality of battery cells.

In some embodiments, the plurality of bus bar are connected to the posts of the battery module by welding, screwing, riveting or bonding with conductive adhesive.

In some embodiments, in a third direction perpendicular to both the first direction and the second direction, a ratio of a length of the post, denoted as L1, to a length of the battery module, denoted as L3, ranges from 0.1 to 0.4.

In some embodiments, in the first direction, a ratio of a width of the post, denoted as L2, to a width of the battery module, denoted as L4, ranges from 0.1 to 0.99.

In some embodiments, in a third direction perpendicular to the first direction and the second direction, a ratio of a length of each of the plurality of bus bars to a length of the post, denoted as L1, ranges from 0.1 to 5.

In some embodiments, in a third direction perpendicular to the first direction and the second direction, a ratio of a length of the liquid-cooling portion to a length of each of the plurality of bus bars ranges from 0.1 to 2.

In some embodiments, the battery module assembly further includes a second liquid-cooling plate arranged at the battery module and arranged opposite to the first liquid-cooling plate.

In some embodiments, a first cooling flow channel is arranged in the first liquid-cooling plate, and a second cooling flow channel is arranged in the second liquid-cooling plate. Each of the first cooling flow channel and the second cooling flow channel is configured to be filled with a cooling medium for cooling the battery module.

In some embodiments, the battery module assembly further includes a liquid inlet pipe and a liquid outlet pipe. The liquid inlet pipe, the first liquid-cooling plate, the liquid outlet pipe and the second liquid-cooling plate are in sequential communication.

In some embodiments, the second liquid-cooling plate has a heat exchange panel and a flow channel panel arranged opposite to each other along the second direction. The heat exchange panel and the flow channel panel jointly form the second cooling flow channel. An abutting area between the heat exchange panel and the battery module is denoted as S1, and an area of a side of the battery module connected to the heat exchange panel is denoted as S2, where a ratio of S1 to S2 ranges from 0.1 to 1.

In some embodiments, along the second direction, a thickness of the heat exchange panel is denoted as D1, and a dimension of the second cooling flow channel is denoted as H1, satisfying 0.02≤D1/H1≤5; a thickness of the flow channel panel is denoted as D2, and a dimension of the second cooling flow channel is denoted as H1, satisfying 0.02≤D2/H1≤5.

In some embodiments, along the second direction, a thickness of a side of the first liquid-cooling plate connected to the bus bar is denoted as D3, and a dimension of the second cooling flow channel is denoted as H2, satisfying 0.02≤D3/H2≤2.

In some embodiments, the battery module assembly further includes a heat conduction layer arranged between the first liquid-cooling plate and the plurality of bus bars.

A battery pack according to embodiments of the present invention includes a housing and the battery module assembly according to any one of the above embodiments arranged within the housing.

A vehicle according to embodiments of the present invention includes the above battery pack.

The above description is merely an overview of the technical solution of the present application. For a clearer understanding of the technical means of the present application to be implemented in accordance with the content of the specification, and to make the above and other objectives, features and advantages of the present application more obvious and understandable, specific embodiments of the present application are set forth below.

### BRIEF DESCRIPTION OF THE DRAWINGS

Upon reading the following detailed description of preferred embodiments, various other advantages and benefits will become apparent to those skilled in the art. The accompanying drawings are only for the purpose of illustrating preferred embodiments and shall not be construed as limiting the present application. Throughout the drawings, identical reference numerals denote identical components.
FIG. 1 is a perspective view of a battery pack according to an embodiment of the present invention;
FIG. 2 is a perspective view showing matching of a first liquid-cooling plate and a second liquid-cooling plate according to an embodiment of the present invention;
FIG. 3 is a perspective view of a first liquid-cooling plate according to an embodiment of the present invention;
FIG. 4 is a perspective view of a second liquid-cooling plate according to an embodiment of the present invention;
FIG. 5 is a front view of a battery module assembly according to an embodiment of the present invention;
FIG. 6 is a perspective view of a battery module assembly according to an embodiment of the present invention;
FIG. 7 is a front view of a battery module assembly according to another embodiment of the present invention;
FIG. 8 is a perspective view of a battery module assembly according to another embodiment of the present invention;
FIG. 9 is a perspective view of a battery module according to an embodiment of the present invention;
FIG. 10 is a perspective view showing matching of a battery module and a bus bar according to an embodiment of the present invention;
FIG. 11 is a perspective view of a battery module according to another embodiment of the present invention;
FIG. 12 is a sectional view of a second liquid-cooling plate according to an embodiment of the present invention;
FIG. 13 is a sectional view of a first liquid-cooling plate according to an embodiment of the present invention;
FIG. 14 is a perspective view of a battery cell according to an embodiment of the present invention.

Reference numerals:
battery pack 1000;
battery module assembly 100; housing 200;
battery module 1; battery cell 11; post 111; shoulder 112;
bus bar 2;
first liquid-cooling plate 3; liquid-cooling portion 31; first cooling flow channel 311; heat dissipation surface 312;
overlapping edge 32;
second liquid-cooling plate 4; second cooling flow channel 41; heat exchange panel 42; flow channel panel 43;
liquid inlet pipe 51; liquid outlet pipe 52.

### DETAILED DESCRIPTION

Embodiments of the present invention are described in detail below, examples of which are illustrated in the accompanying drawings. Embodiments described below with reference to the accompanying drawings are illustrative and intended to explain the present invention, and shall not be construed as limiting the present invention.

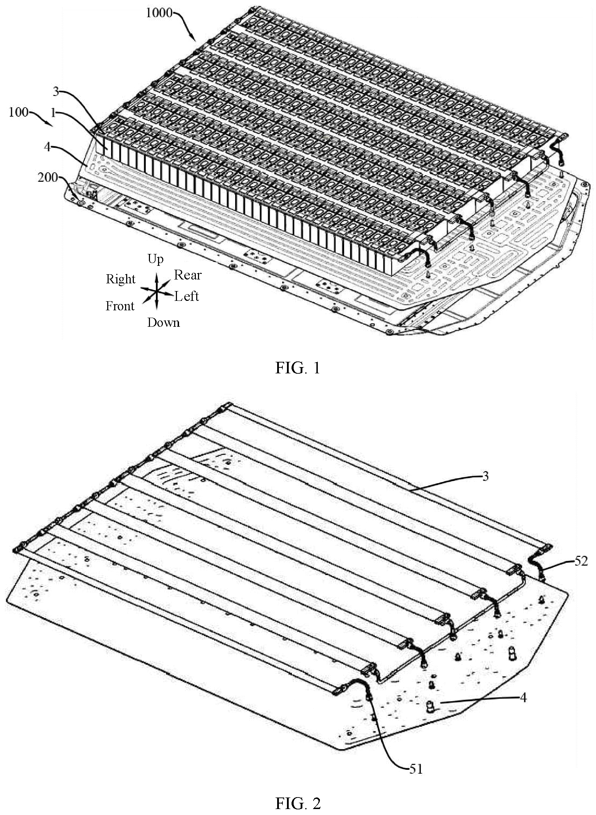

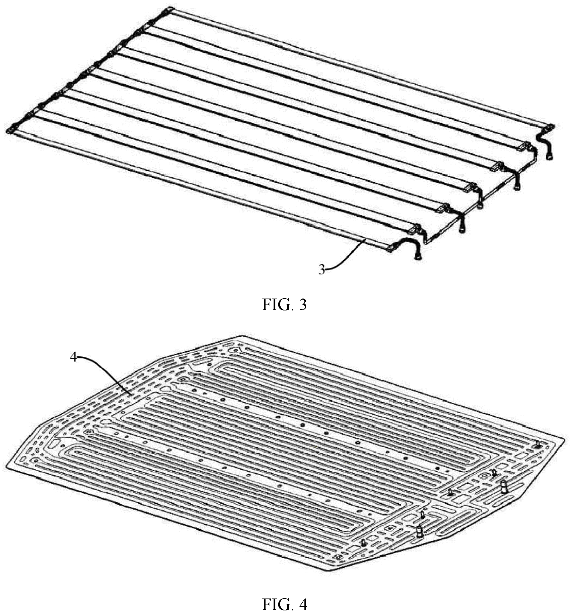

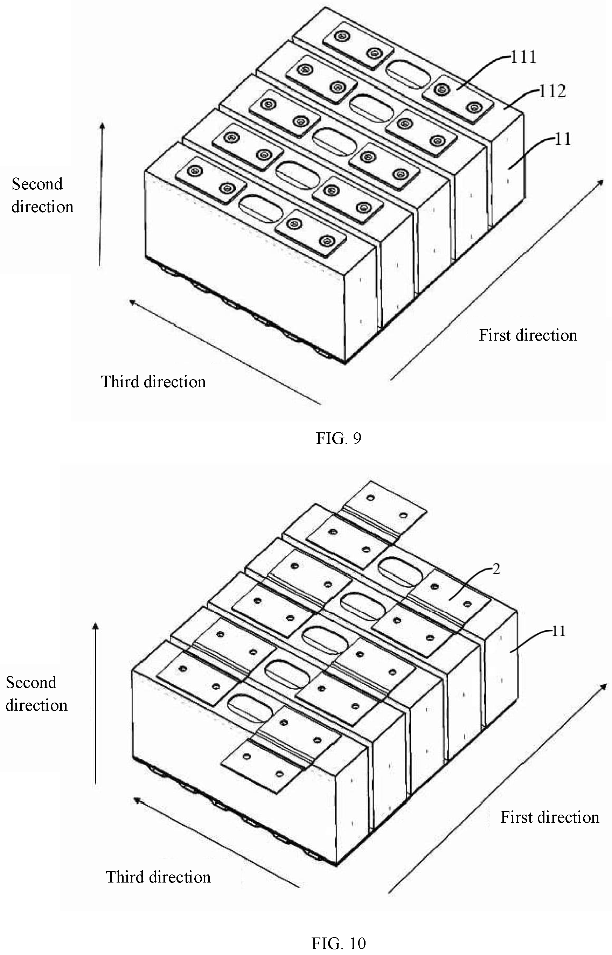

A battery module assembly 100, a battery pack 1000 and a vehicle according to embodiments of the present invention are described below with reference to FIGS. 1 to 13.

The battery module assembly 100 according to embodiments of the present invention includes a battery module 1, a plurality of bus bars 2 and a first liquid-cooling plate 3.

The battery module 1 includes a plurality of battery cells 11 arranged along a first direction (e.g., the left-right direction as shown in FIG. 1). A plurality of bus bars 2 are provided, and each bus bar 2 is connected to posts 111 of two adjacent battery cells 11 to form a bus-bar row. The first liquid-cooling plate 3 extends along the first direction and is attached to the bus-bar row along a second direction (e.g., the up-down direction as shown in FIG. 1) perpendicular to the first direction.

In the battery module assembly 100 of embodiments of the present invention, the first liquid-cooling plate 3 is arranged on the plurality of bus bars 2 connected to the posts 111, so that heat generated at the posts 111 can be dissipated timely and rapidly through the first liquid-cooling plate 3, which improves the overall cooling capability of the liquid cooling assembly for the battery module 1, prevents heat accumulation at the posts 111 from causing excessive temperature of battery cell and limiting charging current, thus suitable for fast-charging batteries, and therefore, helps improve the fast-charging capability and service safety of the battery module 1.

Therefore, the battery module assembly 100 of embodiments of the present invention has the advantages of improving heat dissipation capability at the posts 111 and fast-charging capability.

Specifically, the plurality of bus bars 2 can connect adjacent battery cells 11 in series and/or in parallel in the battery module 1. The posts 111 are arranged at the top of the plurality of battery cells 11, the plurality of bus bars 2 are connected to the posts 111, and the first liquid-cooling plate 3 is arranged at the upper surfaces of the plurality of bus bars 2.

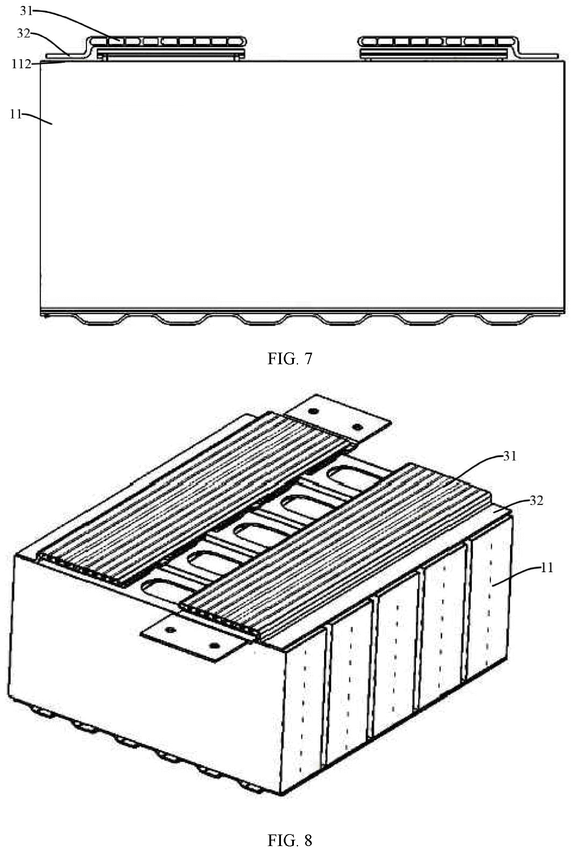

As shown in FIGS. 7 to 8, the first liquid-cooling plate 3 includes a liquid-cooling portion 31 and an overlapping edge 32 connected to each other. The liquid-cooling portion 31 is attached to the bus-bar row, and the overlapping edge 32 abuts shoulders 112 of the plurality of battery cells 11.

In the battery module assembly 100 of embodiments of the present invention, the first liquid-cooling plate 3 is divided into the liquid-cooling portion 31 and the overlapping edge 32 connected with each other. The liquid-cooling portion 31 is attached to the bus-bar row, and the overlapping edge 32 abuts the shoulders 112 of the plurality of battery cells 11. The overlapping edge 32 not only dissipates heat for the shoulders 112 of the plurality of battery cells 11, but also dissipates heat from the shoulders 112 of the plurality of battery cells 11 through the liquid-cooling portion 31, which helps reduce or even eliminate the temperature difference between the shoulders 112 and posts 111 of the plurality of battery cells 11 (sine the overlapping edge 32 has a heat homogenizing effect) and improves the overall cooling capability of the battery module 1. Accordingly, the battery module assembly 100 further improves the heat dissipation capability for the battery module 1.

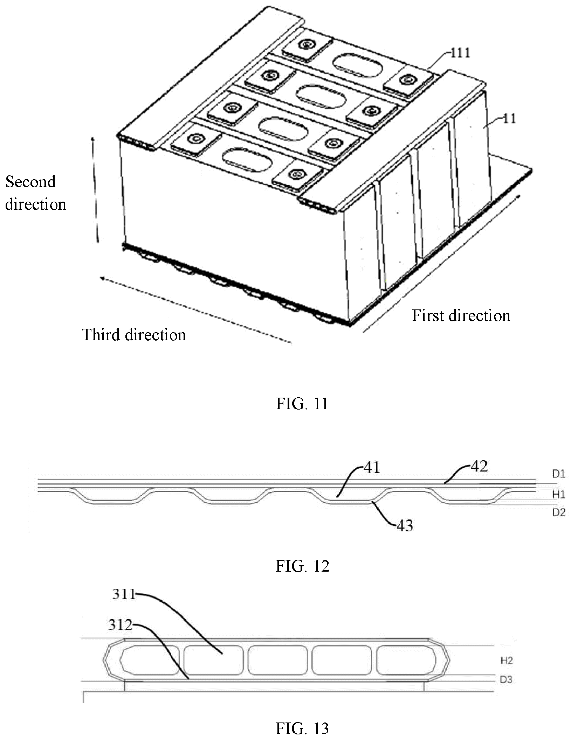

Specifically, the battery module 1 includes a plurality of battery cells 11 arranged along the second direction, and each battery cell 11 is provided with a shoulder or shoulders 112. When both the positive post and negative post of the battery cell 11 are arranged at the top surface of each battery cell 11 and close to the middle of the battery cell 11, the shoulders 112 of each battery cell 11 may be formed at both sides of the respective battery cell 11 along the third direction (e.g., the front-rear direction as shown in FIG. 1), as shown in FIG. 11. When the positive post and negative post are arranged close to the edge of the battery cell 11, the shoulder 112 is formed between the explosion-proof valve and the positive post of the battery cell 11, as well as between the explosion-proof valve and the negative post of the battery cell 11. When the positive post and negative post of the battery cell 11 are oppositely arranged at the top and bottom of the battery cell 11, for example, the positive post is arranged in the middle area of the top surface of the battery cell 11, the shoulders 112 may be formed on both sides of the positive post of the battery cell 11, such as a blade battery cell 11, along the third direction.

The bus bar 2 may be connected to the posts 111 of the battery module 1 by welding, screwing, riveting or bonding with conductive adhesive. Thus, the battery module assembly 100 of embodiments of the present invention has the advantage of high connection convenience. For example, the plurality of bus bars 2 connecting battery cells can be connected to the posts 111 of the plurality of battery cells 11 by riveting, laser welding or other processes, so as to realize high-voltage series or parallel connection of the entire battery module 1.

Optionally, the bus bar 2 may be made of copper alloy or aluminum alloy, and the bus bar 2 is provided with an observation hole. Further, the bus bar 2 may be formed by stamping, machining, casting or other processes.

Optionally, the bus bar 2 and the first liquid-cooling plate 3 are connected by various heat conduction media such as thermally conductive structural adhesive, thermally conductive pad, thermally conductive gel, thermally conductive silicone grease and structural adhesive.

Optionally, the post may be square or circular. The posts generally include a positive post and a negative post, which may be arranged at the same side of the battery module 1 or oppositely arranged.

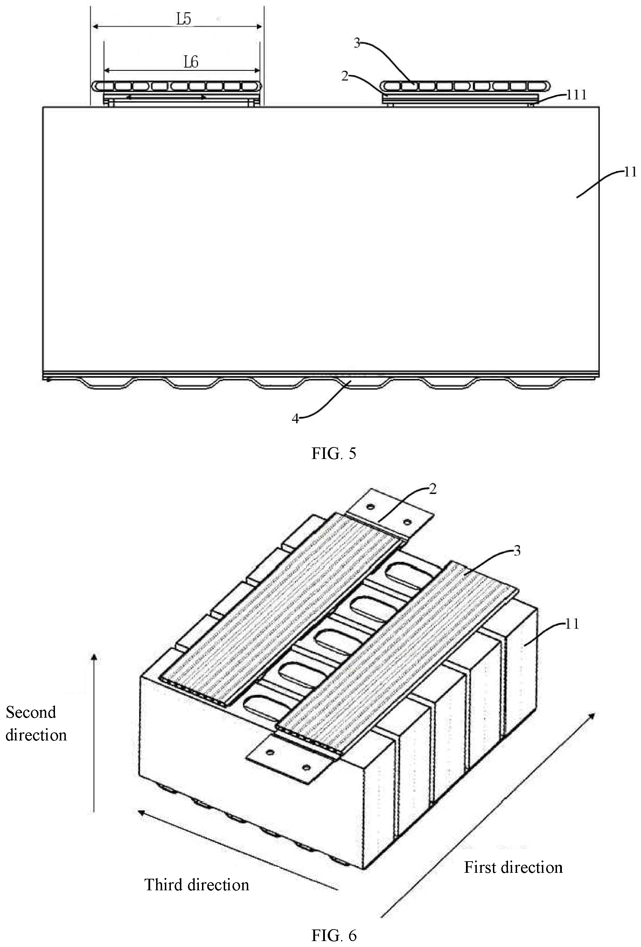

In the third direction (e.g., the front-rear direction as shown in FIG. 1 and/or the third direction as shown in FIG. 6) perpendicular to the first direction and the second direction, the ratio of the length, denoted as L1, of the post 111 to the length, denoted as L3, of the battery module 1 ranges from 0.1 to 0.4. This avoids the problems that an excessively large ratio (i.e., exceeding 0.40) results in insufficient area on the top surface of the battery cell 11 to accommodate the necessary electrical safety distance between the positive post and the negative post of the battery cell 11 with poor safety, and that an excessively small ratio leads to a small proportion of a abutting area between the top surface of the battery cell 11 and the first liquid-cooling plate 3, which results in poor heat exchange efficiency at the top of the battery cell 11. Therefore, the battery module assembly 100 has both good cooling effect and high structural strength.

Specifically, the positive post and negative post of the battery cell 11 may both be arranged at the same side of the battery cell 11, or two or more positive posts plus two or more negative posts may be arranged at the same side of the battery cell 11.

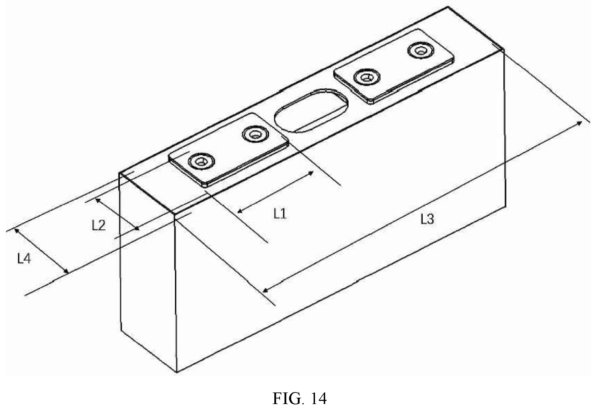

In the first direction, as shown in FIG. 14, the ratio of the width, denoted as L2, of the post 111 to the width, denoted as L4, of the battery module 1 ranges from 0.1 to 0.99. This avoids the problems that an excessively small ratio of L2 to L4 leads to poor cooling effect, and an excessively large ratio of L2 to L4 causes installation interference of the first liquid-cooling plate 3. Therefore, the battery module assembly 100 has both good cooling effect and high installation convenience.

In the third direction perpendicular to the first direction and the second direction, the ratio of the length of the bus bar 2 to the length, denoted as L1, of the post 111 ranges from 0.1 to 5. This avoids the problems that an excessively large ratio of the length of the bus bar 2 to the length L1 of the post 111 causes installation interference of the bus bar 2, and an excessively small ratio of the length of the bus bar 2 to the length L1 of the post 111 results in a small proportion of the abutting area between the bus bar 2 and the post 111, leading to poor electrical connection or heat exchange efficiency of the battery cell 11. Therefore, the battery module assembly 100 has both good cooling effect and high installation convenience.

The ratio of the length of the bus bar 2 to the length L1 of the post 111 ranges from 1.5 to 5, that is, the length of the bus bar 2 is greater than the length of the post 111. Further, the bus bar 2 includes an overlapping portion and an extending portion connected to each other. The overlapping portion overlaps two posts 111 of two adjacent battery cells 11, and the extending portion extends to the shoulder 112 of the battery cell 11.

In the third direction perpendicular to the first direction and the second direction, the ratio of the length of the liquid-cooling portion 31 to the length of each bus bar 2 ranges from 0.1 to 2. This avoids the problems that an excessively small ratio of the length of the liquid-cooling portion 31 to the length of each bus bar 2 leads to poor cooling effect, and an excessively large ratio of the length of the liquid-cooling portion 31 to the length of each bus bar 2 results in small contact area between the liquid-cooling portion 31 and the bus bar 2 and material waste of the liquid-cooling portion 31. Further, the ratio of the length of the liquid-cooling portion 31 to the length of the bus bar 2 may be set to 1, so that the battery module assembly 100 achieves an optimal balance between cooling efficiency and manufacturing cost.

As shown in FIGS. 1 to 6, the battery module assembly 100 according to embodiments of the present invention further includes a second liquid-cooling plate 4 arranged on the battery module 1 and arranged opposite to the first liquid-cooling plate 3. It can be understood that the second liquid-cooling plate 4 and the first liquid-cooling plate 3 are oppositely arranged on two sides of the battery module 1 along the up-down direction as shown in FIG. 1.

In the battery module assembly 100 of embodiments of the present invention, the second liquid-cooling plate 4 is arranged on a side of the battery module 1 opposite to the first liquid-cooling plate 3 to cool the other side of the battery module 1. Accordingly, the battery module assembly 100 further improves the heat dissipation effect and heat dissipation uniformity for the battery module 1.

As shown in FIGS. 12 and 13, a first cooling flow channel 311 is arranged in the first liquid-cooling plate 3, and a second cooling flow channel 41 is arranged in the second liquid-cooling plate 4. Each of the first cooling flow channel 311 and the second cooling flow channel 41 is configured to be filled with a cooling medium for cooling the battery module 1.

In the battery module assembly 100 of embodiments of the present invention, the first cooling flow channel 311 is arranged in the first liquid-cooling plate 3 and the second cooling flow channel 41 is arranged in the second liquid-cooling plate 4 to control the flow path of the cooling medium, thereby prolonging the flow time of the cooling medium in the liquid-cooling plates (i.e., the first liquid-cooling plate 3 and the second liquid-cooling plate 4) and improving the cooling effect of the liquid-cooling plates. Accordingly, the battery module assembly 100 improves the heat dissipation effect for the battery module 1.

Optionally, the first liquid-cooling plate 3 and the second liquid-cooling plate 4 may be of harmonica tube type or stamped and brazed type.

Further, as shown in FIGS. 1 to 4, the battery module assembly 100 according to embodiments of the present invention further includes a first manifold and a second manifold. Each of the first cooling flow channel 311 and the second cooling flow channel 41 includes a plurality of branch channels extending along the second direction. The first manifolds are correspondingly arranged at two ends of the extending direction of the first liquid-cooling plate 3, and the second manifolds are correspondingly arranged at two ends of the extending direction of the second liquid-cooling plate 4.

In the battery module assembly 100 of embodiments of the present invention, each of the first cooling flow channel 311 and the second cooling flow channel 41 is provided with a plurality of branch channels extending along the second direction, thereby expanding the coverage area of the cooling flow channels during the flow of the cooling medium in the liquid-cooling plates and further improving the cooling effect of the liquid-cooling plates on the battery module 1. The arranged first manifolds and second manifolds can converge the cooling medium in the branch channels without arranging connecting pipelines for each branch channel, thereby improving the convenience of connection and layout.

As shown in FIGS. 1 to 4, the battery module assembly 100 according to embodiments of the present invention further includes a liquid inlet pipe 51 and a liquid outlet pipe 52. The liquid inlet pipe 51, the first liquid-cooling plate 3, the liquid outlet pipe 52 and the second liquid-cooling plate 4 are in sequential communication.

In the battery module assembly 100 of embodiments of the present invention, the arranged liquid inlet pipe 51 and liquid outlet pipe 52 communicate the first liquid-cooling plate 3 and the second liquid-cooling plate 4, that is, communicate the first liquid-cooling plate 3 with the second liquid-cooling plate 4, to realize the circulation of the internal cooling medium, thereby improving the cooling uniformity and control convenience for the battery module 1.

Optionally, a plurality of first liquid-cooling plates 3 may be provided, which may be connected in parallel or in series and then communicated with the second liquid-cooling plate 4. Further, the second liquid-cooling plate 4 may be an integral plate structure with a liquid cavity, and the plate structure is provided with a liquid outlet and a liquid inlet. The battery module 1 may be provided with a plurality of battery cell rows arranged in rows, each battery cell row may be provided with two shoulders 112, each shoulder 112 is correspondingly provided with a first liquid-cooling plate 3, and the plurality of first liquid-cooling plates 3 may be connected in series or in parallel to form an integral structure and then communicated with the second liquid-cooling plate 4.

As shown in FIG. 12, the second liquid-cooling plate 4 is provided with a heat exchange panel 42 and a flow channel panel 43 arranged opposite to each other along the second direction. The heat exchange panel 42 and the flow channel panel 43 jointly form the second cooling flow channel 41. The abutting area between the heat exchange panel 42 and the battery module 1 is denoted as S1, and the area of a side of the battery module 1 connected to the heat exchange panel 42 is denoted as S2, where the ratio of S1 to S2 ranges from 0.1 to 1. This avoids the problems of poor cooling effect caused by too small heat exchange area of the second liquid-cooling plate 4 and occupation of excessive internal space of the battery pack 1000 caused by an oversized heat exchange panel 42.

As shown in FIG. 12, along the second direction, the thickness of the heat exchange panel 42 is denoted as D1, and the dimension of the second cooling flow channel 41 is denoted as H1, satisfying 0.02≤D1/H1≤5; the thickness of the flow channel panel 43 is denoted as D2, and the dimension of the second cooling flow channel 41 denoted as is H1, satisfying 0.02≤D2/H1≤5. This avoids the problems of poor cooling effect caused by excessive thickness of the heat exchange panel 42 and/or flow channel panel 43 occupying the space of the second cooling flow channel 41, and weak structural strength caused by insufficient thickness of the heat exchange panel 42 and/or flow channel panel 43. Therefore, the battery module assembly 100 has both good cooling effect and high structural strength.

Optionally, the heat exchange panel 42 may be a flat plate, and the flow channel panel 43 may be a wave-shaped structural plate. The heat exchange panel 42 and the flow channel panel 43 may form the second liquid-cooling plate 4 by stamping and brazing or blow molding. The second liquid-cooling plate 4 may also be a harmonica tube or aluminum profile tube.

Optionally, to ensure the connection strength between the second liquid-cooling plate 4 and the battery module 1 and further improve the cooling effect between the second liquid-cooling plate 4 and the battery module 1, heat exchange media such as thermally conductive pad, thermally conductive adhesive, structural adhesive and double-sided adhesive may be arranged between the second liquid-cooling plate 4 and the battery module 1 to enhance heat conduction.

Along the second direction, the thickness of a side (i.e., the heat dissipation surface 312) of the first liquid-cooling plate 3 connected to the bus bar 2 is denoted as D3, and the dimension of the first cooling flow channel 311 is denoted as H2, satisfying 0.02≤D3/H2≤2. This avoids the problems of poor cooling effect caused by excessive thickness of the first liquid-cooling plate 3 occupying the space of the first cooling flow channel 311, and weak structural strength caused by insufficient thickness of the first liquid-cooling plate 3. Therefore, the battery module assembly 100 has both good cooling effect and high structural strength.

The battery module assembly 100 according to embodiments of the present invention further includes a heat conduction layer arranged between the first liquid-cooling plate 3 and the plurality of bus bars 2. Accordingly, the battery pack 1000 can further improve the heat transfer efficiency between the bus bar 2 and the first liquid-cooling plate 3.

Further, the heat conduction layer may be a thermally conductive pad, thermally conductive adhesive, structural adhesive or double-sided adhesive.

The battery pack 1000 according to embodiments of the present invention may include a housing 200 and the battery module assembly 100 according to any one of the above embodiments arranged within the housing 200.

Therefore, the battery pack 1000 of embodiments of the present invention has the advantages of good fast-charging capability and improved heat dissipation capability.

The vehicle according to embodiments of the present invention includes the above battery pack 1000.

Therefore, the vehicle of embodiments of the present invention has the advantages of good fast-charging capability and improved heat dissipation capability.

In the description of the present invention, it should be understood that the orientation or positional relationship indicated by the terms "center", "longitudinal", "transverse", "up", "down", "front", "rear", "left", "right", "vertical", "horizontal", "top", "bottom", "inside", "outside", "clockwise", "counterclockwise", "axial", "radial" and "periphery" and the like, is bottom seated on the orientation or positional relationship shown in the attached drawings, which is only for the convenience of describing the present invention and simplifying the description, and does not indicate or imply that the referred device or element must have a specific orientation, and be constructed and operated in a specific orientation, so it cannot be understood as a limitation of the present invention.

In addition, the terms "first" and "second" are only used for purpose of description, and cannot be understood as indicating or implying relative importance or implicitly indicating the number of indicated technical features. Therefore, the feature defined as "first" or "second" may explicitly or implicitly include at least one such feature. In the description of the present invention, "a plurality of" means at least two, such as two, three, etc., unless otherwise specifically defined.

In the present invention, unless otherwise expressly defined, terms such as "install", "interconnect", "connect", "fix" shall be understood broadly, and may be, for example, fixed connections, detachable connections, or integral connections; may also be mechanical or electrical connections or intercommunication; may also be direct connections or indirect connections via intervening media; may also be inner communications or interactions of two elements, unless otherwise specified. For those skilled in the art, the specific meanings of the above terms in the present invention can be understood in specific situations.

In the present invention, unless otherwise expressly defined and specified, a structure in which a first feature is "on" or "below" a second feature may include an embodiment in which the first feature is in direct contact with the second feature, or may further include an embodiment in which the first feature and the second feature are in indirect contact through intermediate media. Furthermore, a first feature "on", "above", or "on top of" a second feature may include an embodiment in which the first feature is right or obliquely "on", "above", or "on top of" the second feature, or just means that the first feature is at a height higher than that of the second feature, while a first feature "below", "under", or "on bottom of" a second feature may include an embodiment in which the first feature is right or obliquely "below", "under", or "on bottom of" the second feature, or just means that the first feature is at a height lower than that of the second feature.

In the description of the present invention, terms such as "an embodiment", "some embodiments", "an example", "a specific example" or "some examples" means that a particular feature, structure, material, or characteristic described in connection with the embodiment or example is included in at least one embodiment or example of the present invention. Thus, the appearances of these terms in various places throughout this specification are not necessarily referring to the same embodiment or example of the present invention. Furthermore, the particular features, structures, materials, or characteristics may be combined in any suitable manner in one or more embodiments or examples. In addition, without contradiction, those skilled in the art may combine and unite different embodiments or examples or features of the different embodiments or examples described in this specification.

Although embodiments of the present invention have been shown and described above, it can be understood that the above embodiments are illustrative and shall not be understood as limitation to the present invention, and changes, modifications, alternatives and variations can be made in the above embodiments within the scope of the present invention by those skilled in the art.

Finally, it should be noted that the above embodiments are only used to illustrate the technical solution of the present application, not to limit it; although the present application has been described in detail with reference to the foregoing embodiments, those skilled in the art should understand that they can still modify the technical solution described in the foregoing embodiments, or equivalently replace part or all of the technical features thereof; such modifications or replacements shall not depart from the essence of the technical solution of embodiments s of the present application and shall be covered by the scope of the claims and specification of the present application. In particular, as long as there is no structural conflict, various technical features mentioned in each embodiment can be combined arbitrarily. The present application is not limited to the specific embodiments disclosed herein, but covers all technical solutions falling within the scope of the claims.

## Claims

1. A battery module assembly, comprising:
a battery module comprising a plurality of battery cells arranged along a first direction;
a plurality of bus bars, each of the plurality of bus bars being connected to posts of two adjacent battery cells of the plurality of battery cells to form a bus-bar row; and
a first liquid-cooling plate extending along the first direction and attached to the bus-bar row along a second direction perpendicular to the first direction.

2. The battery module assembly according to claim 1, wherein the first liquid-cooling plate comprises a liquid-cooling portion and an overlapping edge connected to each other, the liquid-cooling portion is attached to the bus-bar row, and the overlapping edge abuts shoulders of the plurality of battery cells; and/or
the plurality of bus bars are connected to the posts of the battery module by welding, screwing, riveting or bonding with conductive adhesive.

3. The battery module assembly according to claim 2, wherein in a third direction perpendicular to both the first direction and the second direction, a ratio of a length of the post, denoted as L1, to a length of the battery module, denoted as L3, ranges from 0.1 to 0.4; and/or
in the first direction, a ratio of a width of the post, denoted as L2, to a width of the battery module, denoted as L4, ranges from 0.1 to 0.99; and/or
in a third direction perpendicular to both the first direction and the second direction, a ratio of a length of each of the plurality of bus bars to a length of the post, denoted as L1, ranges from 0.1 to 5; and/or
in a third direction perpendicular to the first direction and the second direction, a ratio of a length of the liquid-cooling portion, denoted as L5, to a length of each of the plurality of bus bars, denoted as L6, ranges from 0.1 to 2.

4. The battery module assembly according to any one of claims 1 to 3, further comprising a second liquid-cooling plate arranged at the battery module and arranged opposite to the first liquid-cooling plate.

5. The battery module assembly according to claim 4, wherein a first cooling flow channel is arranged in the first liquid-cooling plate, a second cooling flow channel is arranged in the second liquid-cooling plate, and each of the first cooling flow channel and the second cooling flow channel is configured to be filled with a cooling medium for cooling the battery module.

6. The battery module assembly according to claim 4 or 5, further comprising a liquid inlet pipe and a liquid outlet pipe, wherein the liquid inlet pipe, the first liquid-cooling plate, the liquid outlet pipe and the second liquid-cooling plate are in sequential communication.

7. The battery module assembly according to claim 5 or 6, wherein the second liquid-cooling plate has a heat exchange panel and a flow channel panel arranged opposite to each other along the second direction, the heat exchange panel and the flow channel panel jointly form the second cooling flow channel, an abutting area between the heat exchange panel and the battery module is denoted as S1, an area of a side of the battery module connected to the heat exchange panel is denoted as S2, and a ratio of S1 to S2 ranges from 0.1 to 1; and/or
along the second direction, a thickness of the heat exchange panel is denoted as D1, and a dimension of the second cooling flow channel is denoted as H1, wherein 0.02≤D1/H1≤5; and along the second direction, a thickness of the flow channel panel is denoted as D2, and a dimension of the second cooling flow channel is denoted as H1, wherein 0.02≤D2/H1≤5; and/or
along the second direction, a thickness of a side of the first liquid-cooling plate connected to the plurality of bus bars is denoted as D3, and a dimension of the second cooling flow channel is denoted as H2, wherein 0.02≤D3/H2≤2.

8. The battery module assembly according to any one of claims 1 to 7, further comprising a heat conduction layer arranged between the first liquid-cooling plate and the plurality of bus bars.

9. A battery pack, comprising a housing and the battery module assembly according to any one of claims 1 to 8 arranged in the housing.

10. A vehicle, comprising the battery pack according to claim 9.
